# EUROPEAN PATENT APPLICATION

(11) **EP 1 223 497 A2**
(43) Date of publication of application: **17.07.2002**
(21) Application number: 02250270.2
(22) Date of filing: 15.01.2002
(51) Int. Cl.: G06F 1/00

(54) **Consensus protected database**

(30) Priority: 16.01.2001 GB 0101131; 12.04.2001 GB 0109281
(71) Applicant: Abattia Group Limited, Hereford Square, London SW7 4TE (GB)
(72) Inventor: Coates, Eric, Woodl.,St Mary, Lambourn Berksh.RG17 7SL (GB); Wilkie, Barbara, Aylesbury, HP21 8PR (GB)
(74) Representative: Lloyd, Patrick Alexander Desmond

(57) **Abstract**

A consensual database comprises a database of data items (18) at a database server (16) and a store of wrappers (38) at a consensus server (26). A wrapper is applied to all consensual data items. The wrapper includes a field indicating whether the data item can be viewed by other users and/or some other consensus status, fields showing when the data item was last verified and fields showing when and by whom the data item was updated. An anti-tamper engine may also be included. The data correct field is automatically updated when the data subject views the field. An application server (24) applies rules to the provision of data items which may be accessed across the Internet via a web server (22).

## Description

This invention relates to data processing systems and in particular to databases for storing, processing and distributing personal data subject to legislative controls and contractual agreements.

Many countries have regulations regarding the manner in which personal data is stored, for example, in the European Union there is a Data Protection Directive to which all stored data relating to individuals must conform. Other countries have similar mandatory or voluntary codes.

Membership organisations hold data relating to individual members. This data is covered by the data protection legislation referred to above. Membership organisations can include clubs, academic institutions having alumni, not-for-profit organisations having donors and corporate organisations having corporate alumni. For all these organisations there is a need for members to be able to access membership data whilst the organisation complies with data protection legislation. The utility of such consensual databases is not limited to membership organisations but extends to, for example, any entity requiring to conduct transactions with customers within a regulated framework.

At present, for IT systems that support transactions which are conducted between a data controller and a data owner (a data subject) in a regulated environment, the following functions must be designed and programmed for each and every instance of such a system:
The regulation of who may view or otherwise process the data belonging to the individual;
Verification of the correctness and currency of any data item;
Arrangements for the data user to assent to the correctness of his or her data, and to correct it when needed; and
Arrangements for the data owner and data controller (or IT system provider) to maintain up-to-date, and audit any changes in, their mutual agreement relating to the use of the data and the use of the system.

The invention aims to improve the provision of some or all of these functions.

In its broadest form, the invention resides in the use of a data wrapper which is attached to items of data. This data wrapper can carry an indication of how the data subject consents that the data item can be used, in particular, whether the data item can be viewed by other members. This data item may be a single item such as a name or a group of items such as an address.

Another aspect of the invention allows information relating to data items to be updated automatically when the data subject to whom it relates views the data item.

More specifically, the invention provides a method of providing data items stored in a database to authorised users of a database, comprising attaching a wrapper to at least some of the data items, the wrapper including consensus related information, and passing the data item to a user for viewing.

The invention also provides a consensus protected database, comprising a first database for storing data items relating to data subjects, and a second database for storing wrappers for attachment to selected data items, the wrappers each including consensual related information for the data item, and an application server for passing the data items to database users for viewing.

The first and second databases may be physically separate or parts of a larger database.

Embodiments of the invention have the advantage that by using wrappers, users can be given access to information about other users, or members, but they can simply be prevented from seeing information which is marked as confidential. This enables the membership organisation to comply with data protection legislation.

Embodiments of the invention facilitate informed consent between a data subject and the data controller, concerning both the appropriate usage of his data and also the timeliness and correctness of such data.

Embodiments of the invention have the further advantage of providing ease-of-use by the data subject, simplification of administrative tasks for the data controller's staff, simplification of application programming, and a decreased, and therefore more efficient usage of computer and network resources.

Preferably, the wrapper further includes an indication of when and by whom the data item was changed.

Preferably, an audit log also keeps records of any amendments made to data items and their wrapper.

These features have the advantage of facilitating the tracking of changes made to data items or their associated wrapper.

Preferably an anti-tamper engine is provided which comprises a field of the wrapper holding a checksum calculated from the other fields of the wrapper. When a data item is requested, the checksum is recalculated and compared with the stored checksum. If the checksums agree the data item is forwarded.

This has the advantage that corruption of the database or the wrappers through malfunction or deliberate act can easily be detected.

Preferably, the wrapper includes an indication of when the data item was last correct and that indication is updated automatically when the data subject to whom the data item relates views that data item.

The invention further provides a method of and apparatus for updating information relating to an entry in a database having a plurality of data items related to data subjects, the information including an indication of when the data related to a given data subject was last verified as correct by that data subject, comprising updating, or means for updating, the information automatically when the data subject to whom the data item relates views the data item.

This has the advantage that the database can easily be kept up to date with a high degree of confidence that unchanged data is still correct. To confirm that data all the user needs to do is view it, for example in an Internet browser. They are not required to take any positive action.

Embodiments of the invention will now be described, by way of example, and with reference to the accompanying drawings, in which:
Figure 1 is a schematic view of a system embodying the invention;
Figure 2 is a schematic representation of a database for use in the system of Figure 1;
Figure 3 is a view of the system of Figure 1 showing the consensus server in more detail;
Figure 4 is a view of a consensus item;
Figure 5 is a process diagram showing application processing;
Figure 6 illustrates system access and authorisation processes;
Figure 7 illustrates a rules flag; and
Figure 8 illustrates an optional anti-tamper engine for the system of Figure 1.

The embodiment to be described is a generic System for the Consensual Processing of Personal Data (Generic SCPPD). An entity, known as a data controller, who requires to process personal data regarding an individual, known as a data subject, uses such a Generic SCPPD to operate within a framework in which the Data Subject's consent for such processing is required. Data processing can include obtaining, holding, displaying, updating and processing. The Generic SCPPD allows the Data Controller to have a database of data subjects' personal data. The personal data can include one or more personal data items per data subject. Personal data items may be any qualitative or quantitative personal data relating to a data subject and may include, without limitation, name details, contact details, family details, health details, financial details, lifestyle details, life stage details, life events details, demographic details, details of the data subject's relationship to the data controller, qualitative comments relating to the data subject or any other personal data, including photographs and any other video or audio media, or computer executable object.

In the embodiment to be described, the database is accessed by the data controller and users via the Internet and the data controller or the data subjects can also update the database over the Internet. All data exchanges are secure. It is to be understood that the invention is not limited to Internet based systems and other remote access systems could be used or the data controller and/or the data subjects could be attached directly to the database.

The embodiment to be described is particularly useful for membership organisations which keep databases of members. These may include, without limitation, academic institutions keeping records of alumni, not-for-profit organisations keeping records of donors or potential donors, clubs keeping records of members and corporations keeping records of corporate alumni. The system to be described enables membership organisations to act professionally and responsibly with their member's personal data as well as within their legal obligations. It helps to ensure contact with members is both kept alive and up to date. It helps members network with their peers and can strengthen members' interest in the organisation. Moreover it can help in growing the membership base and to mobilise members for fund raising, lobbying or other activities.

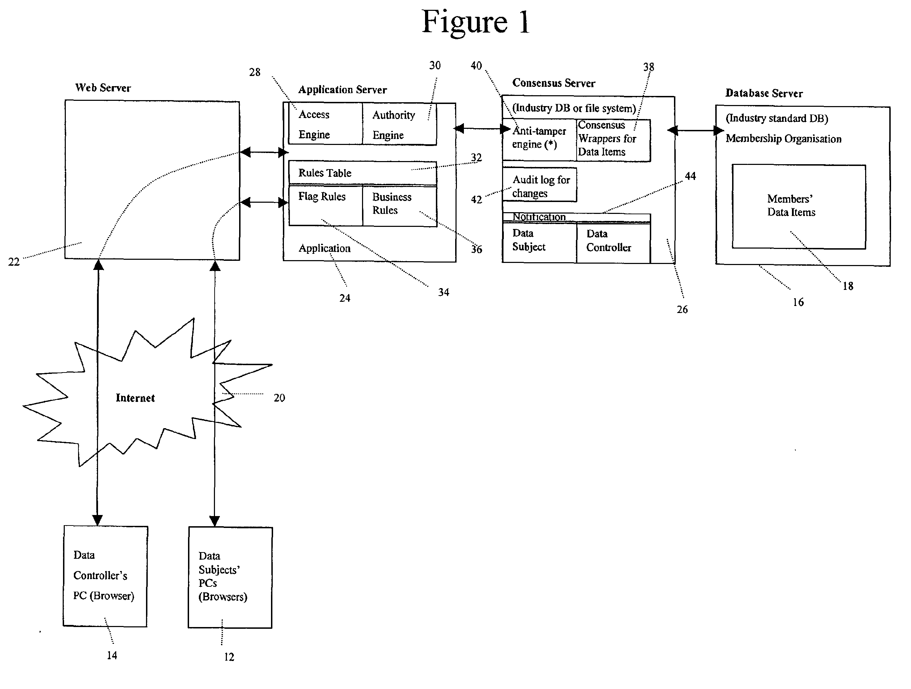

Turning now to Figure 1, a schematic overview of the system is shown. A single representative data subject 12 is shown although in practice there will be many such data subjects. The data subjects access the system via a standard Internet Browser such as Internet Explorer 5 or Netscape Communicator 4 running on a PC. The data controller 14 also accesses the system via a web browser running on a PC. The data controller is typically the membership organisation referred to previously.

The data subjects 12 and data controller 14 access a database server 16 holding the members data items 18 via the Internet 20 and a web server 22. The database server and the web server may be industry standard servers and the membership organisation members data items held on an industry standard database.

Between the web server 22 and the database server 16 are arranged an application server 24, which handles access to the system and the running of the application, and a consensus server 26. The application server 24 includes an access engine 28 and an authority engine 30 and a rules table 32 having a flag rules section 34 and a business rules section 36. The consensus server includes a consensus wrapper 38 for data items from the database 18 and an anti-tamper engine 40, together with an audit log 42 holding details of changes to the records stored, and a notification engine 44 holding data subject and data controller notifications. The anti-tamper engine is not essential and may be omitted. The notification engine allows the Data Controller to control who, if anyone, is informed about changes to data items. A change by a Data Subject may cause a standard e-mail to be generated and sent automatically to the e-mail address of the specified administrator.

A wrapper is a well defined set of further data items which are associated with a given data item. The whole is then treated as a single unit for purposes such as validation or transmission. When such purpose has been accomplished, the wrapper is stripped away, leaving the original data to be further processed.

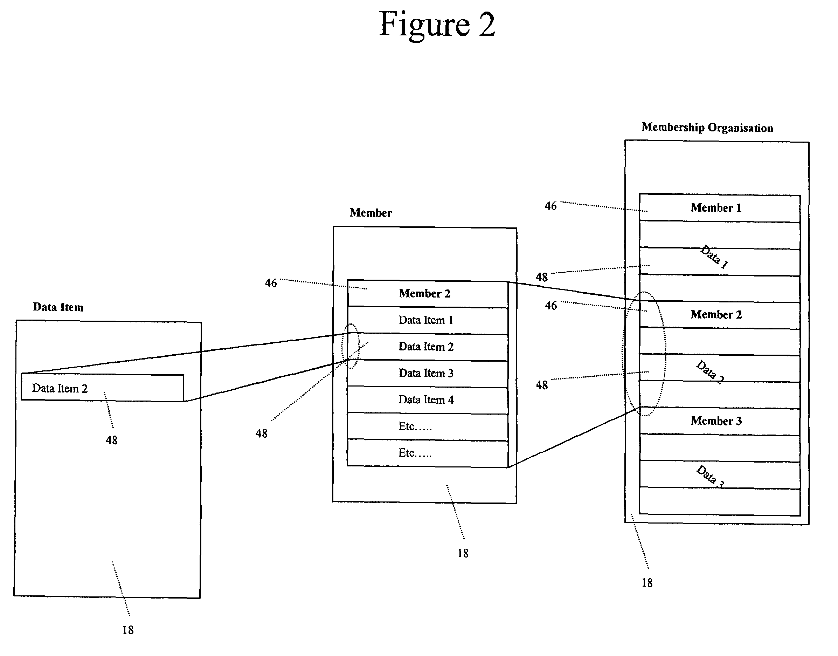

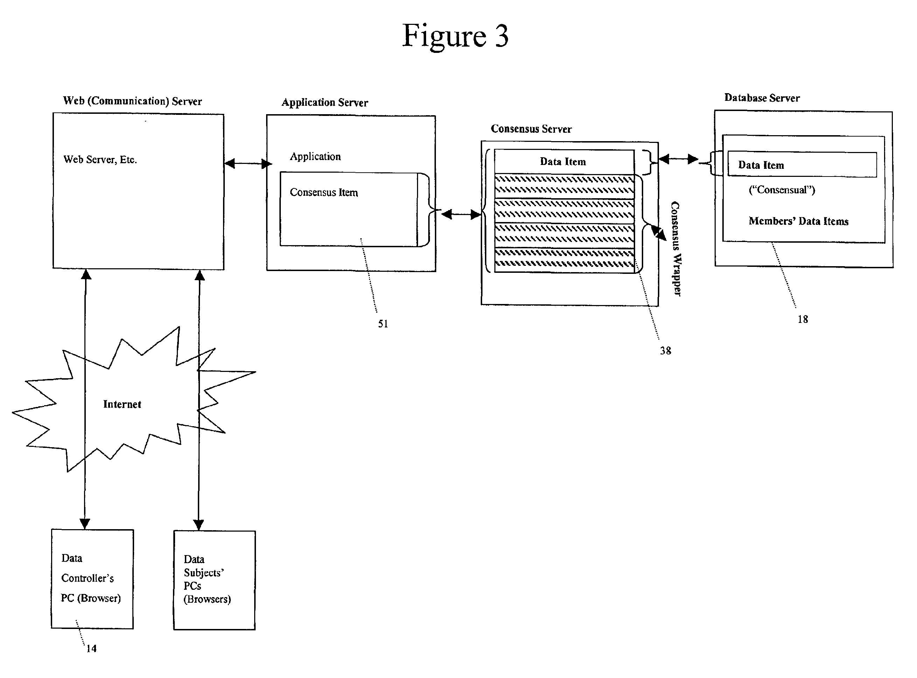

Figure 2 shows how data is held in the database 18 at the database server. A membership organisation has a number of members 46, the data subjects. Each member, a data subject, possesses a number of items of relevant data 48. These data items are stored for each member. However, personal data functions can be processed at the data item level consensually, that is with the authority of the data subject to whom they relate. This is the function of the consensus server which is shown in more detail in Figure 3.

The data items held in the database for each data subject are consensual, for example they have been provided by the data subject to whom they relate who has the option of consenting to other users viewing them, or to other mutually agreed use. For each consensual data item, the consensus server holds a consensus wrapper 38. The consensus wrapper 38 consists of a number of data fields necessary to enable consensual processing. When a data item is requested by the data subject or data controller 14, the data item is read out of the database 18 by the consensus server which adds the consensus wrapper 38 to it before passing it to the application server as a consensus item 51.

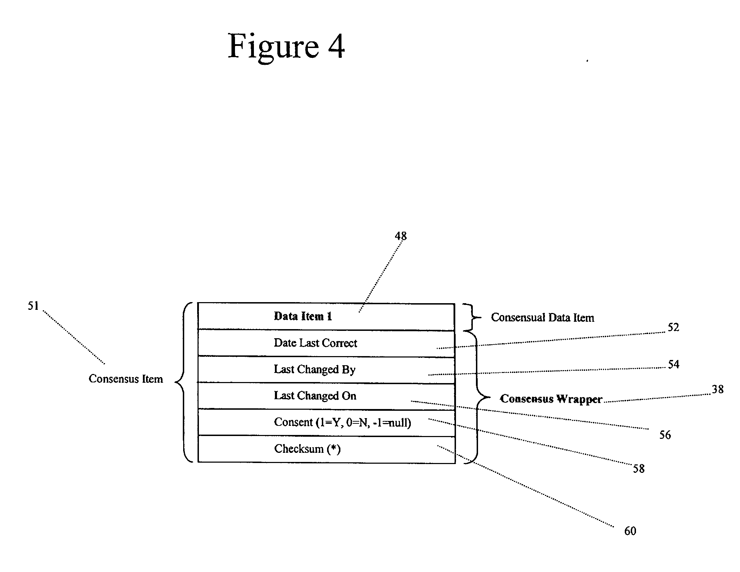

An example of the consensus item is shown in Figure 4. It consists of the data item 48 and the consensus wrapper 38. The consensus wrapper consists of a number of data fields, in the present case 5. These fields are 'Date Last Correct' 52 which indicates the date on which the associated data item was last known to be correct; 'Last Changed By' 54 showing who was responsible for the last change to the data item; 'Last Changed On' 56 showing when the data item was last changed; 'Consent' 58 which in the present case is a 3 state flag showing whether consent has been given by the data subject for the item to be viewed by others, state 1 indicating yes, state 0, no and state -1 showing that consent has not yet been sought. The final field is a check sum 60 which is optional.

When the application updates a consensual data item (consensus item) 51, at the instruction of the data controller, the consensus server updates the consensus wrapper held in the consensus server and, if necessary, the data item on the database server. The latter may not always be necessary, for example if the 'Date Last Correct' field 52 is being updated and there is no change to the data item.

It will be appreciated that not all data items are consensual items. Data items that are not consensual items are passed unchanged in both directions. Whether or not a data item is consensual is an attribute of the data item.

In order that the system functions correctly, the application run by the application server performs the following rule:

When a data subject views a consensual data item, the 'Date Last Correct' field in the consensus item must be updated and the consensus item written back to the consensus server. If the data is further defined as a set of items the complete set must always be processed as a whole for any related data consensual operation.

Thus, the act of viewing a consensual data item in the data subject's browser is sufficient for the 'Date Last Correct' field to be updated. This is advantageous as it requires members only to make any input into the system if the data item requires amendment. This makes it more easy to maintain a database of guaranteed up to date information as it does not require any input from the data subject beyond the viewing of the data item in his or her browser.

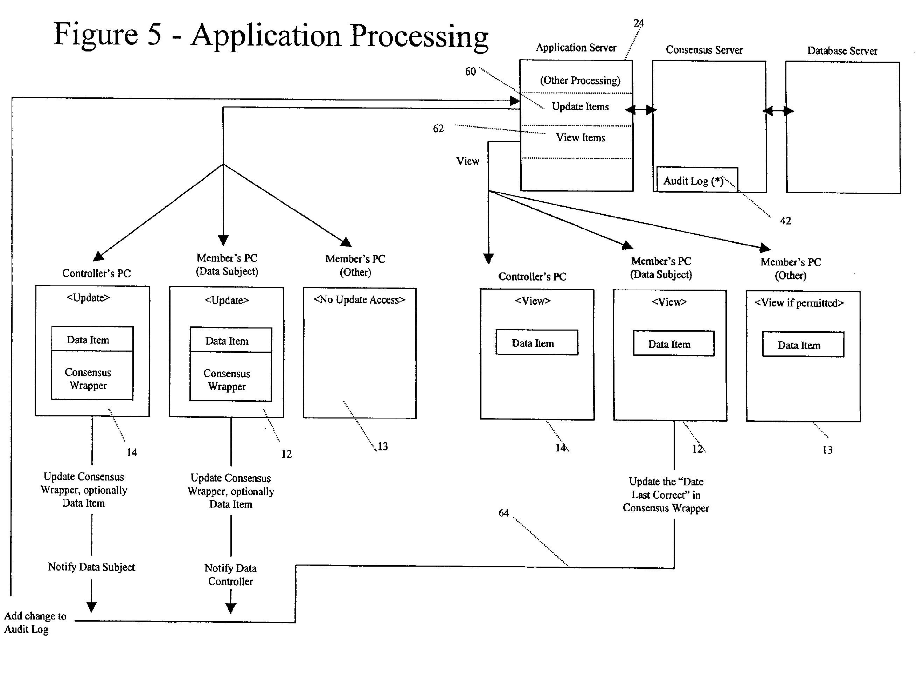

Figure 5 shows how the application server 24 manages the application. The application run by the server includes two routines, update item 60 and view items 62. The viewing of items (see the right hand side of Figure 5) can either be by the data controller's PC 14, the data subject's PC 12 or the PC of a different subject 13 if they have authority to view that data item. As mentioned above, if the data subject to whom the data item relates views the data item, without explicitly updating, that viewing constitutes verification that the data item is correct. In this case, the 'Date Last Correct' field is updated and the application writes the amended consensual item back to the consensus server. The 'Date Last Correct' field is not updated if the data item is viewed by anyone other than the data subject to whom the data item relates.

Thus, Figure 5 shows, on path 64 the updating of the consensual item following viewing by the data subject via the view items routine 62 which then calls the update items routine 60. The audit log 42 in the consensus server maintains a record of any such updates.

The second situation shown in Figure 5 is an explicit update action (see the left hand side of the diagram) using the update items routine 60. Again, the data controller, data subject and other data subjects PCs are shown. In this case, the other data subject 13 has no access to update data. The other data subjects' rights are strictly limited to viewing certain data items only.

Both the data controller PC 14 and the Data Subject PC 12 have access to the data item and consensus wrapper to update data items via path 64. An example is where a data subject may have changed address: the data subject may enter the change himself or notify the change to the data controller who performs the data update. Updating of a data item by the data controller or the data subject automatically updates the consensus wrapper. In some circumstances, the data subject or controller causes the 'consent' flag to be changed without changing a data item. This occurs, for example, when a data subject releases a data item for viewing by others which was previously withheld or vice versa.

Thus, if the data item is updated, the 'date last correct', 'last changed by' and 'last changed on' fields 52, 54, 56 will be updated in the consensus wrapper (see Figure 4). Even if the data item is not changed, in the case of a change in the consent flag, the wrapper will still be updated as the consent field 58 will have changed.

The update items routine 60 will pass all changes to the consensus server which will make the necessary changes to the consensus wrapper and pass any changes in the data item to the database server to update the data item. All changes are logged by the audit log 42 at the consensus server.

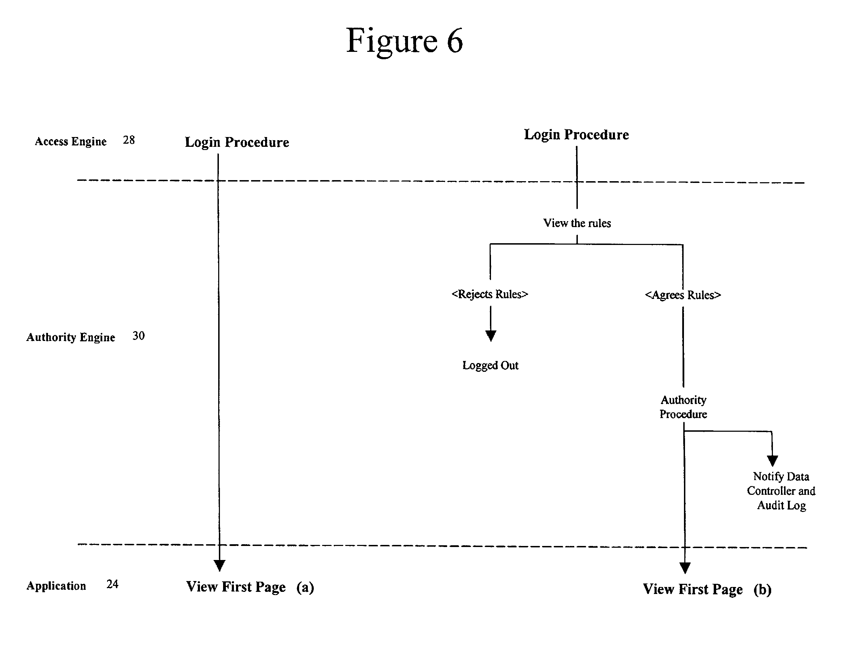

Figure 6 shows the access and authorisation procedures handled by the access engine 28 and authority engine 30 at the application server 24.

All access to the system either by the members (data subjects) or the data controller is via the access engine. The access engine supervises a login procedure which is typically a user name and password login. The access engine includes a store of user names and associated passwords and compares a given password to a user name to grant access if the password given matches that stored for the user name and to deny access if it does not.

If the system rules have not changed since the user last logged in, the provision of the correct password will take the user to the first page which is provided by the application.

If the rules have changed since the last login, if the user is logging in for the first time, or if the user is logging in after he, or the data controller, withdrew agreement to the system rules, the authority engine requires the user to agree to rules governing access to the system data, software licences etc. The user may then reject the rules, which are displayed in his browser, in which case he is logged out of the system, or accept them.

If the user accepts the rules, the authority engine executes an authority procedure which may require a password or similar procedure. This may be the same as the access engine password and a new user may be given the choice of changing passwords at this stage. Once any authority procedure has been completed, the user can view the first page supplied by the application. At the same time, the data controller is notified of the new authorisation or re-authorisation and the audit log at the consensus engine is also updated.

Although referred to as engines, both the access and authorisation routines may be discrete parts of the application.

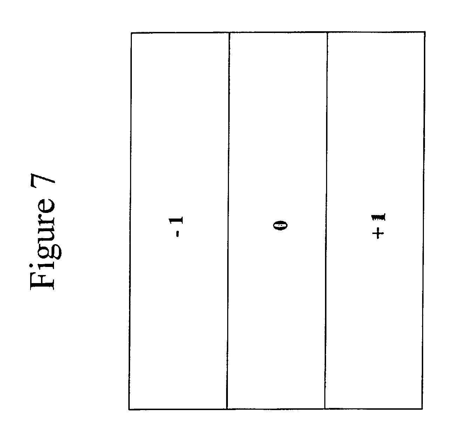

Figure 7 shows the rules table held in the application server. At least one rules flag is associated with each data subject to indicate whether or not they have agreed to the business rules. It is the state of this flag which determines whether the authority engine procedures of Figure 6 are performed, or whether the system goes straight from provision of the correct password to viewing the first screen.

The business rules flag has three states: +1, 0, -1. - 1 indicates that the user has not yet seen the rules; 0 indicates that the user has rejected the rules and +1 indicates that the user has agreed to the rules.

At least one rules flag is also associated with each consensual data item. In this embodiment this is the consent field 58 (Figure 4). This has three states +1, 0 along with state -1 being a default state. State +1 indicates that the user consents to the data item being displayed to other members, state 0 that he does not. If the flag is set a state -1, a default rule applies, for example that the data item is displayed to other users if it is not sensitive data but not displayed to other users if it is sensitive data. Sensitive data may be defined as data for which permission is required from the data subject before it can be viewed by others, or it can have other definitions. For example, it may be as defined in the United Kingdom Data Protection Act, 1998. There may be other consensual rule flags, for example to state if certain processing is permitted on the item.

The rules table is shown below as table 1. It is used by the application to direct the processing logic and it and the rules are expressed in plain language that can be displayed or printed. It will be appreciated that the consensual rules that apply to data controllers are different from those applying to members (data subjects) as appropriate to their roles. Thus, the data controller can view data items that are not visible to other members.

**Table 1**

| **Rules flag example** | **-1** | **+1** | **0** |
|---|---|---|---|
| (Data Item) Consent to display data item to all members. | (Default Processing) Display if non-sensitive. Not to display if sensitive. | Display data item to other members. | Do not display data item to other members. |
| (Data Subject) Agree to consensual rules and terms and conditions. | Member has not yet seen the rules. | Member has agreed the rules. (can now use full application) | Member has rejected the rules (can only use access engine). |

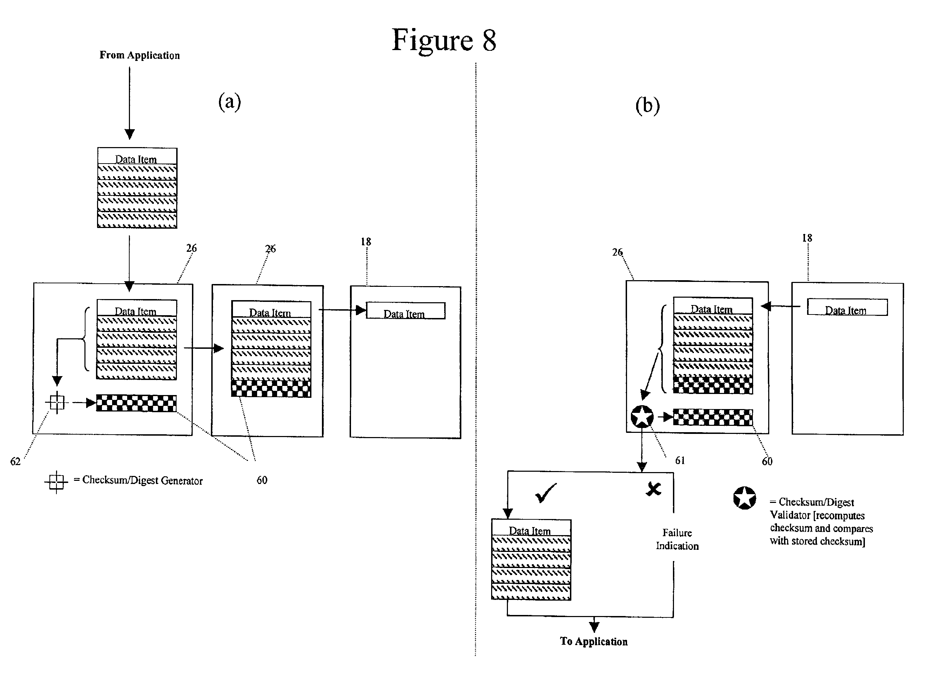

Figure 8 shows the anti-tamper engine 40 which forms a part of the consensus server in a second embodiment of the invention. This engine 40 uses the optional checksum field 60 of the consensus wrapper to guard against corruption of the database or consensus server data by malfunction or malice. The checksum can be calculated by a number of ways but will change each time a field in the consensus wrapper is altered. Each time a data item having a wrapper is accessed, the checksum is calculated and compared against a stored value. If the new value is different, the data has been tampered with or corrupted. Thus, in Figure 8, the right hand side, (b), shows a data item retrieved from the database 18, and passed to the consensus server 26, where the wrapper is attached. The Checksum/Digest validator 61 then generates a checksum for the data item and wrapper and compares it with the stored value in field 60. If the checksum test is correct, the data item and wrapper are passed to the application. If not, a failure notification is passed to the application for display to the user. On the left hand side of Figure 8, (a), a data item and wrapper are provided from the application. This may include modified data or one or more modified fields in the wrapper. The checksum is computed by the Checksum/Digest generator 62 and stored in the checksum field 60 by the consensus server 26. The wrapper is then stored, with the checksum, in the consensus server 26 and the data item passed back to the database server.

The embodiments of the invention described have a number of advantages. First, the use of a wrapper enables data to be held in a database and be presented to a number of users confident that necessary regulations regarding data protection are observed. The wrapper contains information which can indicate whether or not the data item can be displayed to third parties. Furthermore, the wrapper contains information about the freshness of the data including when it was last looked at, when and by whom it was amended. This information is extremely useful and easily retrievable through the activity log. This has the advantage of making the stored data transparent. The ability of the system to attest to the accuracy of a data item merely by virtue of it having been looked at by the data subject is especially useful. This means that the database operator can have a much higher degree of confidence in the accuracy of stored data than in existing systems as the user is not required to take any positive action to confirm that the data item is valid.

## Claims

1. A method of providing data items stored in a database to authorised users of a database, comprising attaching a wrapper to at least some of the data items, the wrapper including consensus related information, and passing the data items to a user for viewing.

2. A method according to claim 1, wherein the wrapper includes an indication of whether the data items can be displayed to other users.

3. A method according to claim 2, wherein the indication comprises a consent flag.

4. A method according to claim 3, wherein the consent flag has a first state in which the data item can be viewed by other users, a second state in which the data item cannot be viewed by other users, and a default state in which the data item can be viewed by other users only if it is not defined as sensitive data.

5. A method according to any of claims 1 to 4, in which the wrapper includes an indication of when the data item was last correct, the method further comprising automatically updating the indication of when the data was last correct when the user to whom the data item relates views the data item.

6. A method according to any of claims 1 to 5, wherein the wrapper further includes an indication of when and by whom the data item was changed.

7. A method according to any of claims 1 to 6, comprising updating an audit log when the data item or any data in the wrapper relating to the data item is changed.

8. A method according to any previous claim, wherein the wrapper indicates a checksum, comprising calculating a value of the checksum when a data item is requested from the database, comparing the calculated value with the checksum in the wrapper, and forwarding the data item to the user only if the calculated checksum agrees with the checksum in the wrapper.

9. A method according to claim 1, wherein a flag is set for each user indicating whether they have accepted a current rule set governing access to the database, and access to the database is denied if the rule set is not accepted.

10. A method according to any preceding claim, comprising automatically notifying an administrator if a user makes a change to a data item related to the user.

11. A method of updating information relating to an entry in a database having a plurality of data items related to data subjects, the information including an indication of when the data related to a given data subject was last verified as correct by that data subject, comprising updating the information automatically when the data subject to whom the data item relates views the data item.

12. A computer program which, when run on a computer system, causes the computer system to perform the steps of any of claims 1 to 11.

13. A consensus protected database, comprising a database for storing data items relating to data subjects, and a store for storing wrappers for attachment to selected data items, the wrappers each including consensual related information for the data item, and an application server for passing the data items to database users for viewing.

14. A consensus protected database according to claim 13, wherein the database is located at a database server and the store is located at a consensus server.

15. A consensus protected database according to claim 13 or 14, wherein the application server comprises a rules table for applying flag rules and consensus rules to data items and system users respectively.

16. A consensus protected database according to any of claims 13 to 15, wherein the wrapper comprises a plurality of data fields including a consent flag indicating whether the data item can be viewed by other database users.

17. A consensus protected database according to claim 16, wherein the consent flag has a first state indicating to the application server that the data item can be viewed, a second state indicating to the application server that the data item cannot be viewed, and a third default state in which the data item can be viewed only if the data item is not defined as sensitive data.

18. A consensus protected database according to any of claims 13 to 17, wherein the wrapper comprises fields indicating when the data item was last correct, and the application server includes an updating function for updating the data last correct field when a data subject to whom a data item relates views that data item.

19. A consensus protected database according to any of claims 13 to 18, wherein the wrapper comprises fields indicating when and by whom the data item was changed.

20. A consensus protected database according to any of claims 14 to 19, wherein the wrapper includes a checksum field which stores a checksum based on the content of the wrapper fields, the consensus server further comprising means for generating a fresh checksum when the data item is requested by the application server, for checking the fresh checksum with the checksum in the wrapper field and for passing the data item to the application server only if the fresh checksum corresponds to the checksum in the wrapper.

21. A consensus protected database according to claim 15, wherein the application server comprises means for checking the status of a business rule flag and for displaying business rules to the user if the flag indicates that the rules have not been accepted by the user.

22. A consensus protected database according to claims 13 to 21, wherein the database further comprises an audit log for logging all updates to data items and/or wrappers.

23. A consensus protected database according to claims 13 to 22, comprising a web server for providing access to users across the Internet.

24. A consensus protected database according to claims 13 to 23, wherein the users comprise a data controller and a plurality of data subjects.

25. A consensus protected database according to claims 13 to 24 comprising means for automatically notifying an administrator if a user makes a change to a data item related to the user.

26. A consensus protected database according to any of claims 13 to 25, wherein the database and the store are parts of the same physical entity.

27. Apparatus for updating information relating to an entry in a database having a plurality of data items related to data subjects, the information including an indication of when the data related to a given data subject was last verified as correct by that data subject, comprising means for updating the information automatically when the data subject to whom the data item relates views the data item.
